# EUROPÄISCHE PATENTSCHRIFT

(11) **EP 1 350 583 B1**
(45) Veröffentlichungstag und Bekanntmachung des Hinweises auf die Patenterteilung: **06.09.2006**
(21) Anmeldenummer: 03005754.1
(22) Anmeldetag: 14.03.2003
(51) Int. Cl.: B21J 15/10, B21J 15/32, B21D 53/88

(54) **Stanzkopf, Bearbeitungswerkzeug mit einem solchen Stanzkopf sowie Bearbeitungsvorrichtung mit einem solchen Stanzkopf oder Bearbeitungswerkzeug**
Punch head, machining tool comprising such a punch head as well as machining equipment comprising such a punch head or machining tool
Tête de poinçonnage, outil d'usinage comprenant cette tête de poinçonnage ainsi que dispositif d'usinage comprenant cette tête de ponçonnage ou cet outil d'usinage

(30) Priorität: 19.03.2002 DE 10212193; 06.03.2003 DE 10310096
(43) Veröffentlichungstag der Anmeldung: 08.10.2003
(73) Patentinhaber: Schmidt, Heiko, Dipl.-Ing., 93047 Regensburg (DE)
(72) Erfinder: Schmidt, Heiko, Dipl.-Ing., 93047 Regensburg (DE)
(74) Vertreter: Graf, Helmut

(56) Entgegenhaltungen:
- DE-A- 4 415 973

## Beschreibung

Die Erfindung bezieht sich auf einen Stanzkopf gemäß Oberbegriff Patentanspruch 1. Die Erfindung bezieht sich weiterhin auf ein Bearbeitungswerkzeug und eine Bearbeitungsvorrichtung gemäß Oberbegriff Patentanspruch 18 bzw. 19.

"Bearbeitungswerkzeug" im Sinne der Erfindung ist insbesondere ein Tiefzieh- und/oder Stanz- und/oder Umformwerkzeug zur Verwendung in einer Presse oder dergleichen Bearbeitungsvorrichtungen. Bearbeitungswerkzeuge dieser Art sind bekannt und werden z. B. bei der Herstellung von Werkstücken in Form von Bauteilen für Fahrzeugkarosserien verwendet.

Bekannt sind grundsätzlich auch solche Bearbeitungswerkzeuge mit im Werkzeug angeordneten Stanzköpfen bzw. Vorrichtungen, die zum Einbringen z.B. von Muttern oder mutterähnlichen Bauteilen dienen. Muttern im Sinne der Erfindung sind insbesondere Stanzmuttern und/oder Nietmuttern und/oder Einpressmuttern. Mutterähnliche Bauteile im Sinne der Erfindung sind Muttern, aber auch solche Bauteile mit einem vieleckigen oder zylindrischen Körper und dabei insbesondere auch solche, bei denen die axiale Länge des Bauteilkörpers kleiner ist als der maximale Durchmesser dieses Körpers. Mutterähnliche Bauteile sind insoweit beispielsweise auch Gleit- oder Führungsbuchsen, deren Buchsenkörper ähnlich dem Körper von Stanz- oder Einpressmuttern ausgeführt ist, allerdings mit einer Öffnung ohne Gewinde.

Unter "Stanzkopf" wird im Sinne der Erfindung eine Vorrichtung verstanden, mit der ein Einbringen (Fügen) und Verankern von Verbindungselementen, z.B. Bolzen oder Muttern oder bolzen- oder mutterähnlichen Bauteilen, beispielsweise Gewindebolzen, gewindelose Bolzen, Stanzmuttern, Nietmuttern, Einpreßmuttern oder Hülsen möglich ist.

Bekannt ist speziell ein Stanzkopf (DE 44 15 973 A1, gemäß dem Oberbegriff des Anspruchs 1), zum Verarbeiten von Stanzmuttern, bei dem die Stanzmuttern über einen äußeren Versorgungsschlauch einer am Anfang eines Ladekanals gebildeten Beladeposition zugeführt werden, an der sich eine schwenkbare Vorschubklinke befindet, und zwar zur Weiterbewegung jeder Stanzmutter aus der Beladeposition in einen von dieser Position an einen Fügekanal bzw. an eine dortige Bereitstellungsposition sich erstreckenden Ladekanal, in welchem eine größere Anzahl an Stanzmuttern in Reihe aneinander anschließend aufgenommen sind und aus welchem jeweils die erste Stanzmutter dieser Reihe, die sich an der Bereitstellungsposition befindet, mit dem im Fügekanal bewegten Stempel mitgeführt und in das betreffende Werkstück eingebracht wird. Das Nachfördern der Stanzmuttern im Ladekanal erfolgt bei dieser Ausführung durch die schwenkbare Vorschubklinke, mit der nach jedem Arbeitszyklus eine neue Stanzmutter in den Ladekanal eingeschoben und dabei die gesamte Reihe an Stanzmuttern im Ladekanal um eine Mutter weiterbewegt wird, sodass wieder die in dieser Reihe erste Mutter an die Bereitstellungsposition gelangt. Bei dem bekannten Stanzkopf ist eine mit der Bewegung des Bearbeitungswerkzeugs bzw. mit der Bewegung der Bearbeitungsvorrichtung synchronisierte Bewegung der Vorschubschwinge erforderlich.

Bekannt ist weiterhin ein Stanznietkopf (EP-A-1 270 113, Stand der Technik gemäß Art. 54(3) EPÜ) zum Vernieten von Stanznieten an Blech- oder Karosserieteilen, mit einem Stempel, der in einem in einem Gehäuse des Stanzkopfes gebildeten Fügekanal zwischen einer Ausgangsstellung, in der sich der Stempel mit einer Stempelfläche an einer Bereitstellungsposition befindet, von unten nach oben in eine über der Bereitstellungsposition liegende Fügestellung bewegbar ist, und zwar unter Mitführung eines an der Bereitstellungsposition aufgenommenen Stanzniets und zum Verbinden zweier an der Fügestellung bereitstehender Bleichteile mit diesem Stanzniet. Die Stanznieten werden bei in der Ausgangsstellung befindlichem Stempel jeweils getaktet über einen von einem Versorgungsschlauch gebildeten Zuführkanal zugeführt, und zwar vorbei an einer gefederten Sperrklinke an die Bereitstellungsposition gefördert, an der jeder Stanzniet dann durch gefederte Halteklauen seitlich gefasst ist. Eine störungsfreie Bereitstellung der Stanznieten an der Bereitstellungsposition ist bei diesem bekannten Stanzkopf nicht gewährleistet.

Aufgabe der Erfindung ist es, ein Bearbeitungswerkzeug aufzuzeigen, welches bei hoher Betriebssicherheit hinsichtlich des wenigstens einen Stanzkopfes eine vereinfachte Ausbildung und auch eine verbesserte Gestaltungsfreiheit hinsichtlich Anordnung und Orientierung des Stanzkopfes bietet.

Zur Lösung dieser Aufgabe ist ein Stanzkopf entsprechend dem Patentanspruch 1 ausgebildet. Ein Bearbeitungswerkzeug mit einem solchen Stanzkopf und eine Bearbeitungsvorrichtung sind entsprechend dem Patentanspruch 18 bzw. 19 ausgebildet.

Bei der Erfindung erfolgt das Zuführen der Verbindungselemente an den jeweiligen Stanzkopf und die Positionierung dieser Bauteile an der jeweiligen Übergabe- oder Bereitstellungsposition des Stanzkopfes ohne federnde Positionierelemente, wie Klinken oder dergleichen, sondern ausschließlich durch Förderluft, gegebenenfalls unterstützt durch Permanentmagneten und/oder Unterdruck. Hierdurch ergibt sich eine besonders einfache Konstruktion. Ein besonderer Vorteil der Erfindung besteht darin, dass der interne Zuführkanal zwischen dem Anschluss für die äußere Zuführung Bauteile und der Bereitstellungsposition am Fügekanal zumindest auf einer Teillänge von einer verformbaren oder flexiblen internen Zuführung gebildet ist, so dass der Verlauf dieser Zuführung innerhalb des Werkzeuges und/oder die Verbindung der Zuführung mit der äußeren Versorgung der jeweiligen Werkzeugausbildung optimal angepasst werden kann, bei der Konstruktion des jeweiligen Werkzeuges also nicht auf den Verlauf einer starren Führung Rücksicht genommen werden muss, wie dies bei bekannten Stanzköpfen der Fall ist, die eine starre, geradlinige Zuführung oder aber bei einem erhöhten konstruktiven Aufwand eine abgewinkelte, dann aber ebenfalls starre interne Zuführung aufweisen.

Der erfindungsgemäße Stanzkopf dient in an sich bekannter Weise zum Einbringen von Verbindungselementen, wie Bolzen oder Muttern oder aber von bolzen- oder mutterähnlichen Bauteilen, die auch als Fügeteile bezeichnet werden, in Werkstücke.

Diese Verbindungselemente oder Fügeteile werden dem Stanzkopf über eine äußere Zuführung mit Druckluft (Förderluft) zugeführt. In einer stanzkopfseitigen Führung werden die Verbindungselemente oder Fügeteile dann an eine Bereitstellungsposition bewegt, von der sie jeweils über einen Fügekanal in ein Werkstück, beispielsweise in ein solches aus Blech oder Flachmaterial eingebracht werden.

Die Mittel zum Bewegen der Verbindungselemente innerhalb der Stanzkopfführung an die Bereitstellungsposition werden dabei von der äußeren Förderluft oder dem äußeren Förderluftstrom, der beispielsweise durch wenigstens eine Druckluftdüse in einer Versorgungseinheit für die Verbindungselemente oder Fügeteile erzeugt wird, und/oder von einer internen Förderluft oder einem internen Förderluftstrom gebildet, der am oder im Bereich des Stanzkopfes erzeugt wird, und zwar durch wenigstens eine dortigen Luftaustrittsdüse.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung ein Bauteil oder Verbindungselement in Form einer Mutter zusammen mit einem Werkstück aus Blech;
- Fig. 2: den Niederhalter und das Werkzeugunterteil eines Bearbeitungswerkzeugs zur Verwendung in einer Presse, zusammen mit einem Stanzkopf zur Verarbeitung der Muttern der Figur 1, im Schnitt;
- Fig. 3: den Stanzkopf der Figur 2 in einer Schnittdarstellung senkrecht zum Schnitt der Figur 2;
- Fig. 4: in Einzeldarstellung und im Längsschnitt das zylinderartige Gehäuse der Führung für den Plunger des Stanzkopfes der Figuren 2 und 3;
- Fig. 5 und 6: im Längsschnitt sowie im Querschnitt den oberen Teil des zweiteiligen Kopfstückes des Stanzkopfes der Figuren 2 und 3;
- Fig. 7 und 8: in vereinfachter Darstellung und in Seitenansicht sowie im Schnitt eine eine Aufgabe- oder Schußeinrichtung einer äußeren Versorgungseinheit für die Muttern, zum Einbringen dieser Muttern in den an den Stanzkopf führenden äußeren Versorgungsschlauch;
- Fig. 9: in vereinfachter Darstellung ein Verbindungselement in Form eines Bolzens, zusammen mit einem Werkstück aus Blech;
- Fig. 10: eine Darstellung ähnlich Figur 2, jedoch bei einem zur Verarbeitung von Verbindungsbolzen ausgebildeten Stanzkopf.

In den Figuren ist 1 ein Werkstück aus Blech, beispielsweise ein Stanz- oder Biegeteil aus Stahlblech. In eine Öffnung des Werkstückes 1 ist durch Fügen und anschließendes Verpressen ein Verbindungselement in Form einer Mutter 2 verankert.

Mit 3 ist ein Niederhalter und mit 4 ein Unterteil eines mehrteiligen Werkzeugs 5 bezeichnet, welches beispielsweise ein Tiefzieh - und/oder Stanz- und/oder Umformwerkzeug ist und zum Herstellen des Werkstücks 1 sowie gleichzeitig auch zum Fügen und Fixieren der als Einpreßmutter ausgebildeten Mutter 2 dient. Für das Einbringen der Mutter 2 in das Werkstück 1 weist das Werkzeug 5 einen Stanzkopf 6 auf, der bei der dargestellten Ausführungsform am Niederhalter 3 befestigt ist.

Der Stanzkopf 6 besteht im wesentlichen aus einem vorderen Kopfabschnitt oder Kopfstück 7, welches bei der dargestellten Ausführungsform zweiteilig, bestehend aus den Teilen 7' und 7", ausgebildet ist, und aus dem über die Oberseite des Kopfstückes 7 wegstehenden zylindrischen Gehäuses 8. Im Kopfstück 7 bzw. in dem unteren Teil 7" dieses Kopfstückes ist ein vertikaler Fügekanal 9 ausgebildet, der an der Unterseite des Kopfstückes 7 offen ist, und zwar im Bereich einer ringförmigen Anlagefläche 9. In dem Fügekanal 9 sowie in einer an diesen Fügekanal 9 achsgleich nach oben anschließender Verlängerung ist ein Stempel oder Plunger 11 um einen vorgegebenen Hub (Doppelpfeil H) in der Stempelachse A_{S} verschiebbar vorgesehen, und zwar zwischen einer Ausgangsstellung, in der das untere Plunger- oder Stempelende 12 oberhalb eines den Fügekanal 9 schneidenden und ebenfalls im Kopfstück 7 bzw. im Teil 7" ausgebildeten Ladekanals 13 angeordnet ist und in der somit der Ladekanal 13 zum Fügekanal 9 bzw. zu einer Bereitstellungsposition 9' im Fügekanal 9 unterhalb der Stempelfläche 12 offen ist, und einer Stellung, in der der Stempel 11 den Ladekanal 13 zum Fügekanal 9 hin sperrt und sich das Stempelende 12 in der Nähe der unteren Öffnung des Fügekanals 9 bzw. der dortigen Ringfläche 10 in einer Füge- und Preßposition befindet. An dem Stempelende 12 sind bei der dargestellten Ausführungsform zwei Permanentmagneten 14 vorgesehen, die radial gegenüber der Stempelachse A_{S} versetzt angeordnet sind, und zwar bezogen auf diese Achse um 180° gegeneinander versetzt.

Der mit seiner Längserstreckung radial zur Achse A_{S} verlaufende Ladekanal 13 ist Bestandteil einer internen Zuführung, dient in der nachstehend noch näher beschriebenen Weise zum Zuführen der Muttern 2 an die Bereitstellungsposition 9' und geht in einen Kanal 15 einer aus einem flexiblen Material, vorzugsweise aus Kunststoff hergestellten flexiblen Zuführung 16 über, die mittels eines Kupplungsstückes 17 mit dem Kopfstück 7 verbunden ist. Der Querschnitt sowohl des Fügekanals 9 als auch des Kanals 15 der Zuführung 16 sind an die Form der Muttern 2 derart angepaßt, daß diese in den genannten Kanälen nur eine vorgegebene Orientierung aufweisen können, und zwar mit ihrer Mutternachse A_{M} senkrecht zur Längserstreckung des jeweiligen Kanals derart orientiert, daß diese Achse A_{M} jeder im Ladekanal 13 angeordneten Mutter 2 parallel zur Stempelachse A_{S} liegt. Die flexible Zuführung 16 reicht bis an den Rand des Werkzeugs 5 oder bis an einen Bereich dieses Werkzeugs, wo die Zuführung 16 über eine geeignete Kupplung 18 mit einem äußeren Versorgungsschlauch 19 verbunden ist, der einen Kanal mit dem ebenfalls an die Form der Muttern angepaßten Querschnitt aufweist und über den die Muttern 2 dem Stanzkopf 6 zugeführt werden.

An der Bereitstellungsposition 9' ist ein Sensor 20 vorgesehen, der bei Vorhandensein einer Mutter 2 an dieser Bereitstellungsposition 9' ein entsprechendes Sensorsignal liefert, welches die Bereitschaft des Stanzkopfes 6 für das Einbringen einer Mutter 2 in das unter dem Stanzkopf 6 bereitstehende Werkstück 1 anzeigt. Bei Fehlen des Sensorsignales 20 wird die das Werkzeug 5 aufweisende Presse gestoppt.

An der Bereitstellungsposition 9' sind weiterhin zwei seitlich von dieser Bereitstellungsposition angeordnete und um eine Achse parallel zur Achse A_{S} versetzte Permanentmagneten 21 vorgesehen. Die Permanentmagneten 21 bzw. die Achse, um die die Permanentmagneten um 180° gegeneinander versetzt angeordnet sind, sind gegenüber der Achse A_{S} zu dem dem Fügekanal 9 gegenüberliegenden verschlossenen Ende der Bereitstellungsposition 9', wo auch der Sensor 20 angeordnet ist, geringfügig versetzt, so daß durch die Permanentmagneten 21 die jeweilige, aus einem ferromagnetischen Material (Stahl) hergestellte Mutter 2 zentriert in die Bereitstellungsposition 9' hineinbewegt und dort auch gehalten wird.

Wie die Figuren zeigen, besitzt das Stempelende 12 in der Ausgangsstellung des Stempels 11 einen Abstand von der Ebene der Oberseite des Fügekanals 9 und damit einen Abstand a) von der Oberseite einer an der Bereitstellungsposition 9' bereitstehenden Mutter 2. An der Bereitstellungsposition 9 sind weiterhin zwei Klinken 22 vorgesehen, die bei der dargestellten Ausführungsform jeweils als Winkelstück ausgebildet sind, und zwar mit den beiden Schenkeln 22' und 22" und die am freien Ende des Schenkels 22' um eine Achse 23 parallel zur Längserstreckung des Fügekanals 9 schwenkbar gelagert sind, und zwar gegen die Wirkung einer Rückstellfeder 24. Mit ihren Schenkeln 22" ragen die Klinken 22 in den Fügekanal 9 am Übergang zur Bereitstellungsposition 9' seitlich hinein und bilden mit der dem Schenkel 22' zugewandten Oberseite ihres Schenkels 22" in der Ausgangsstellung eine Führungsfläche für die Muttern 2, d. h. die Fortsetzung der unteren Führungsfläche des Ladekanals 13. Beim Bewegen des Stempels 2 mit einer an der Stempelfläche 12 anliegenden und mit dem Stempel 12 mitgeführten Mutter 2 aus der Bereitstellungsposition 9' in den Fügekanal 9 werden die beiden Klinken 22 gegen die Wirkung der Rückstellfedern 24 zur Seite gedrückt. Die Gelenke 23 befinden sich dabei bei der für die Figuren gewählten Darstellung oberhalb der Schenkel 22", d. h. in einem Abstand von der Ebene der Ringfläche 10, der größer ist als der entsprechende Abstand, den die Schenkel 22" von dieser Ebene ER aufweisen.

Bei der dargestellten Ausführungsform sind der Ladekanal 13 und die Bereitstellungsposition 9' in dem oberen Kopfstückteil 7' ausgebildet. In diesem Kopfstückteil sind auch die beiden Klinken 22 vorgesehen und mit den Gelenken 23 schwenkbar gelagert.

Das Bewegen des Stempels 11 aus der Ausgangsstellung in die Fügeposition erfolgt in bekannter Weise dadurch, daß das Werkzeug bzw. die Presse auf das über das Gehäuse 8 vorstehende Ende 11' des Stempels einwirkt, d. h. bei jedem Arbeitshub der Presse wird zunächst der Stanzkopf zusammen mit dem Niederhalter 3 auf das Werkzeugunterteil 4 zubewegt, so daß das Werkstück 1 an dem Bereich, an dem eine Mutter 2 eingebracht werden soll, zwischen dem Stanzkopf 6 bzw. der ringförmigen Anlagefläche 10 und einem Bereich 4' des Werkzeugunterteils eingespannt ist. Bei dem weiteren Arbeitshub der Presse wirkt dann ein nicht dargestelltes Werkzeugoberteil auf das Ende 11' des Stempels 12 ein, so daß sich der Stempel 11 zusammen mit der am Stempelende 12 vorgesehenen Mutter 2 unter Überdrücken der Klinken 22 in den Fügekanal 9 bewegt, und zwar zum Fügen und Verpressen der Mutter 2 im Werkstück 1.

Der Rückhub des Stempels 11 aus der Fügeposition in seine Ausgangsposition kann beispielsweise durch eine im Gehäuse 8 aufgenommene Rückstellfeder erfolgen, erfolgt aber bei der dargestellten Ausführungsform durch Druckluft. Hierfür bildet das Gehäuse 8 einen Zylinder, in dessen Zylinderraum 25 ein auf dem Stempel 11 befestigter Kolben 26 verschiebbar vorgesehen ist. Der den Stempel 11 unterhalb des Kolbens 26, d. h. an der dem Kopfstück 7 zugewandten Seite umschließende ringförmige Zylinderraum 25 ist über einen Anschluß 27 mit einer Druckluftquelle verbunden, und zwar beispielsweise permanent. Diese Druckluftquelle ist so ausgebildet, daß sie einen Volumenausgleich in der Weise ermöglicht, daß der Zylinderraum 25 als "Gasfeder" wirkt, die den Stempel 11 in seine Ausgangsstellung vorspannt und die beim Bewegen des Stempels 11 aus der Ausgangsstellung überdrückt wird.

Oberhalb des Kolbens 26, d. h. an der dem Kopfstück 7 abgewandten Seite dieses Kolbens ist im Gehäuse 8 ein zweiter, den Stempel 11 umschließender ringförmiger Zylinderraum 28 gebildet, der über einen Anschluß 29 gesteuert mit Druckluft beaufschlagt werden kann, und zwar derart, daß der Stempel 11 aus seiner Ausgangsstellung in die Fügeposition bewegt oder in dieser Fügeposition gehalten wird, um so den Fügekanal 9 bzw. die dortige Bereitstellungsposition 9' gegenüber dem Ladekanal 13 zu sperren, und zwar beispielsweise bei Störungen oder aber in solchen Fällen, in denen in ein Werkstück 1 mit dem Stanzkopf 6 keine Mutter eingebracht werden soll. Diese Steuerung des Stempels 11 über den Zylinderraum 28 ermöglicht es unter anderem, mit ein und demselben Werkzeug 5 Werkstücke 1 wahlweise mit Muttern 2 oder ohne diese Muttern zu fertigen und/oder aber bei mehreren an dem Werkzeug 5 vorgesehenen Stanzköpfen 6 an bestimmten Bereichen des jeweiligen Werkstückes 1 Muttern 2 vorzusehen oder aber wahlweise auch wegzulassen.

Der Druck der gesteuerten Druckluft für den Zylinderraum 28 ist so gewählt, daß trotz des im Zylinderraum 25 herrschenden Drucks der Stempel 11 in seine Fügeposition bewegt und/oder dort gehalten wird. Grundsätzlich besteht auch die Möglichkeit, die Druckluftzufuhr an den Zylinderraum 25 so zu steuern, daß dann, wenn der Zylinderraum 28 gesteuert mit Druckluft beaufschlagt wird, der Zylinderraum 25 entlüftet wird.

Das Zuführen der Muttern 2 von einer äußeren Versorgungseinheit über den Versorgungsschlauch 19 an den Stanzkopf 6 erfolgt beispielsweise einzeln derart, daß jede Mutter 2 mit Hilfe von Druckluft über den Versorgungsschlauch 19 und die Zuführung 16 in den Ladekanal 13 eingeschossen wird und über diese Förderluft schließlich auch an die Bereitstellungsposition 9' gelangt. Das Einschießen kann unabhängig von der Bewegung des Werkzeugs bzw. der Presse erfolgen, und zwar selbstverständlich derart, daß am Beginn eines jeden Arbeitshubes der Presse und damit am Beginn der Bewegung des Stempels 11 aus der Ausgangsposition in Richtung Fügeposition eine Mutter 2 an der Bereitstellungsposition 9' bereitsteht. Unabhängig von dieser Forderung kann das Einschießen der Muttern 2 unabhängig von der Bewegung der Presse bzw. des Werkzeugs erfolgen, beispielsweise in der Form, daß bereits eine Mutter 2 dann eingeschossen wird und sich im Ladekanal 13 befindet, bevor der Stempel 11 sich am Ende eines Arbeitshubes in seine Ausgangsstellung zurückbewegt hat. Die Mutter 2 liegt dann gegen die Außenfläche des sich zurückbewegenden und die Bereitstellungsposition 9' sperrenden Stempel an, so daß die Mutter 2 dann, sobald der Stempel 11 seine Ausgangsstellung erreicht hat, durch die Förderluft in die Bereitstellungsposition 9' hineinbewegt wird. Die äußere Förderluft steht beispielsweise permanent an oder wird dann abgeschaltet, sobald das Signal des Sensors 20 vorliegt.

Die äußere Förderluft tritt beispielsweise an dem offenen Ende des Fügekanals 9 aus oder aber im Kopfstück 7 ist zusätzlich wenigstens ein Austrittskanal für diese Förderluft vorgesehen. Durch die Permanentmagneten 21 wird die jeweilige Mutter 2 an der Bereitstellungsposition 9' zentriert und auch gehalten, bevor der Stempel 11 erneut aus seiner Ausgangsposition sich in Richtung Fügeposition bewegt. In dem Ladekanal 13 befinden sich keinerlei Klinken oder dergleichen Elemente, die beim Weiterbewegen der Muttern 2 insbesondere auch in die Bereitstellungsposition 9' überdrückt werden müßten. Vielmehr wird die jeweilige Mutter ohne Überwindung von Klinken oder dergleichen Widerstände allein durch den äußeren Förderluftstrom bis an die Bereitstellungsposition 9 bewegt und dort durch den äußeren Förderluftstrom und/oder die Permanentmagneten 21 in Position gehalten. Dadurch, daß das Stempelende 12 mit den Permanentmagneten 14 in der Ausgangsstellung des Stempels von der Oberseite der jeweiligen Mutter 2 beabstandet ist (Abstand a), ist auch verhindert, daß die Position und Lage der Mutter 2 in der Bereitstellungsposition 9' von diesem Permanentmagneten 14 beeinträchtigt wird. Grundsätzlich besteht auch die Möglichkeit, an der Bereitstellungsposition 9' beispielsweise nasenartige Anlagen für die Oberseite der jeweiligen Mutter 2 vorzusehen, die (Anlagen) dann durch den sich aus der Ausgangsstellung in die Fügestellung bewegenden Stempel 11 federnd zur Seite gedrückt werden.

So ist es beispielsweise möglich, die äußere Förderluft als Dauerluft auszubilden und/oder mit dieser äußeren Förderluft als Dauerluft oder als Schußluft die Muttern 2 derart an den Stanzkopf 6 zu fördern, daß in dem dortigen Ladekanal 13 jeweils mehrere Muttern 2 vorhanden sind. Speziell auch beim Einschießen der Muttern 2 an den Stanzkopf 6 vor Rückkehr des Stempels 11 in seine Ausgangsposition ist es auch möglich, mittels eines im Ladekanal 13 angeordneten Sensors 30 das Vorhandensein wenigstens einer Mutter 2 im Ladekanal zu einem vorgegebenen Zeitpunkt zu überprüfen und bei Nichtvorhandensein einer Mutter 2 erneut eine Mutter 2 in den Stanzkopf 6 einzuschießen, bevor der nächste Arbeitshub beginnt.

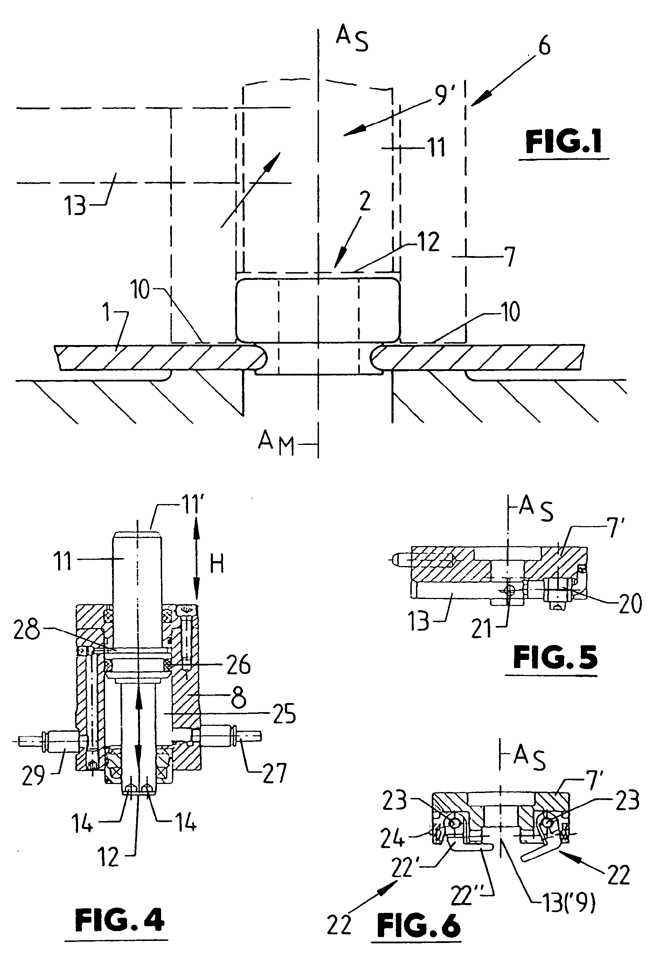

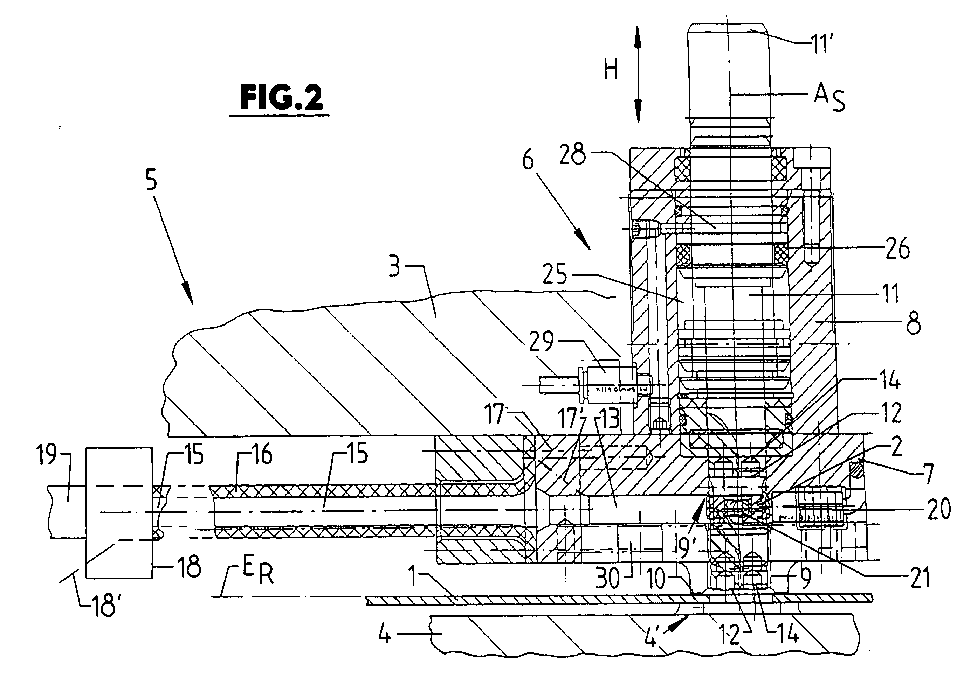

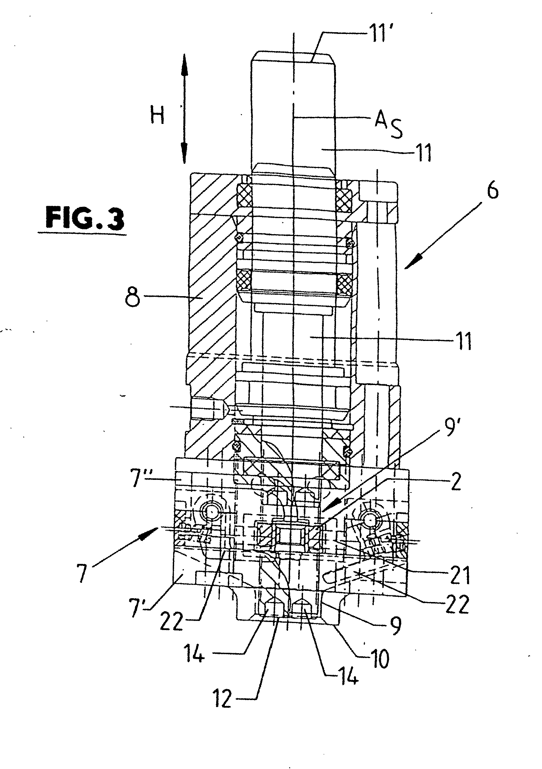

Zur Unterstützung der äußeren Förderluft kann auch ein interner Förderluftstrom in Richtung Bereitstellungsposition 9' erzeugt werden, und zwar beispielsweise durch wenigstens eine Druckluftaustrittsdüse an wenigstens einem Kupplungsstück 17 oder 18, wie dies in der Figur 2 durch 17' und 18' angedeutet ist. Durch Luftaustrittsöffnungen in den Kanälen 13 bzw. 15 ist für eine Entkopplung des äußeren Förderluftstromes und des inneren Förderluftstromes gesorgt, d.h. dafür gesorgt, daß der innere Förderluftstrom dem äußeren Förderluftstrom nicht entgegenwirkt.

Weiterhin ist es möglich, anstelle der Permanentmagneten 14 oder zusätzlich zu diesen Permanentmagneten an dem Stempelende 12 wenigstens eine mit einem Unterdruck beaufschlagbare Düsenöffnung vorzusehen, um die jeweilige Mutter 2 an dem Stempelende 12 auch dann zu halten, wenn sie aus einem nicht magnetischen Material besteht, wobei dann dieser Unterdruck so gesteuert ist, daß er erst mit dem sich aus der Ausgangsstellung bewegenden Stempel eingeschaltet wird. Ebenso ist es auch möglich, anstelle der Permanentmagneten 21 oder aber zusätzlich zu diesen an der Bereitstellungsposition 9' Vakuumöffnungen vorzusehen, die die jeweilige Mutter 2 an der Bereitstellungsposition 9' hält und zentriert, und zwar auch dann, wenn diese Mutter aus einem nicht magnetisierbaren Material besteht.

Speziell wird das Vakuum bzw. der Unterdruck an der wenigstens einen an der Stempelfläche 12 vorgesehenen Unterdruckaustrittsöffnung erst dann eingeschaltet, wenn sich die betreffende Mutter 2 an der Bereitstellungsposition 9' befindet, um ein Fördern der Mutter 2 an die Bereitstellungsposition 9' durch die Förderluft nicht zu beeinträchtigen.

Vorstehend wurde weiterhin davon ausgegangen, daß der Stanzkopf 2 an dem Niederhalter des Werkzeugs 5 vorgesehen ist. Selbstverständlich kann das Werkzeug auch anders aufgebaut sein, so kann der Stanzkopf 6 beispielsweise gefedert an einem Werkzeugteil, beispielsweise an dem in den Figuren nicht dargestellten oberen Werkzeugteil des zweiteiligen Werkzeugs vorgesehen sein. Selbstverständlich ist es auch möglich, den Stanzkopf 6 z. B. in gewendeter Form einzusetzen, d. h. mit der ringförmigen Anlagefläche 10 oben liegend an einem Werkzeugunterteil oder an einem Federboden.

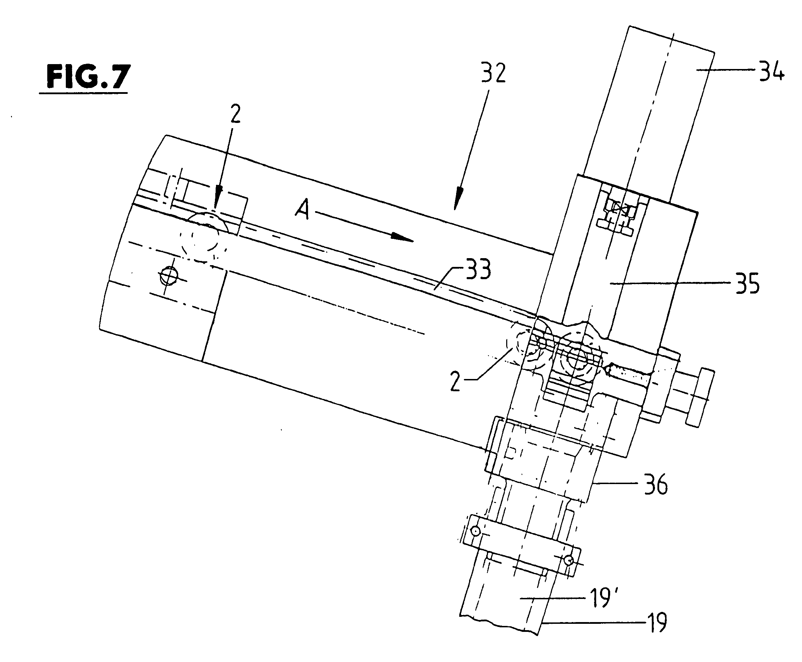

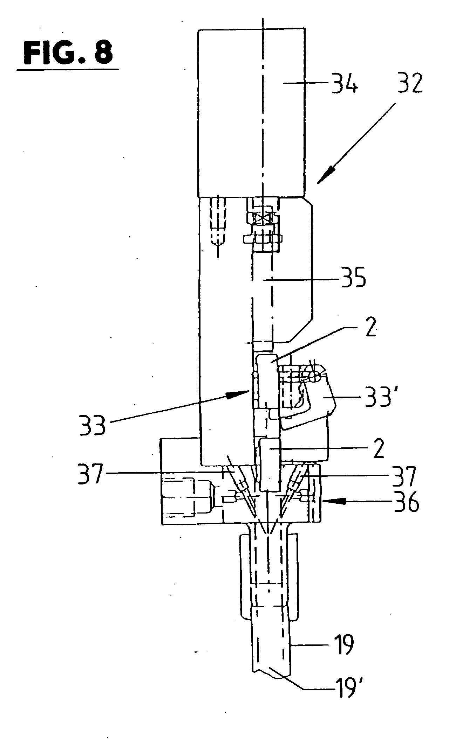

Die Figuren 7 und 8 zeigen in Seitenansicht sowie im Schnitt eine Aufgabe- oder Schußposition oder -einrichtung einer ansonsten nicht näher dargestellten äußeren Versorgungseinheit, über die die Muttern 2 nacheinander in den äußeren Versorgungsschlauch 19 eingebracht werden.

Diese in den Figuren 7 und 8 allgemein mit 32 bezeichnete Aufgabe- bzw Schußeinrichtung besteht im wesentlichen aus einer bei der dargestellten Ausführungsform gegenüber der horizontalen geneigten Führung 33, in die die Muttern 2 beispielsweise über einen Vibrationstopf aus einer ungeordneten Menge eingebracht werden und in der die Muttern durch die Neigung in Richtung des Pfeiles A durch die Schwerkraft bewegt werden, und zwar derart, dass die Muttern 2 in der Führung 33 eine Reihe bilden, in welcher die Muttern 2 dicht aneinander anschließen, und zwar mit der Achse ihres Muttergewindes senkrecht zur Längsrichtung der Führung 33 orientiert. Am Ende der Führung 33 schließt sich an einer Seite das dem Stanzkopf 6 entfernt liegende Ende des Versorgungsschlauches 19 an, und zwar derart, dass die Längserstreckung des Versorgungsschlauches 19 bzw. des in diesem Versorgungsschlauch gebildeten und in seinem Querschnitt an die Form der Muttern 2 angepaßten Kanals 19' senkrecht zu der Achse der Führung 33 liegt. An der dem Versorgungsschlauch 19 gegenüberliegenden Seite der Führung 33 befindet sich ein Betätigungselement 34 für einen Stößel 35, mit dem durch Aktivieren des Betätigungselementes 34 jeweils die an dem betreffenden Ende der Führung 33 bereit stehende Mutter 2 in den Kanal 19' hineinbewegt wird. Die Führung ist dort teilweise von einer federnden Klinke 33' gebildet.

An einem Anschlußstück 36, mit dem der Versorgungsschlauch 19 mit der Führung 33 verbunden ist, befinden sich Druckluftaustrittsdüsen 37, die beispielsweise ständig mit einer nicht dargestellten Druckluftquelle verbunden sind, und zwar zur Erzeugung der Förderluft, mit der jede Mutter 2 von der Aufgeabeeinheit 32 an den Stanzkopf 6 gefördert bzw. geschossen wird. Jede Mutter 2 wird mit dem Stößel 35 soweit in den Kanal 19' hineinbewegt, dass sich diese Mutter in Strömungsrichtung der Förderluft hinter den Düsen 37 befindet und somit mit der aus den Düsen 37 austretenden Förderluft mitgeführt bzw. an den Stanzkopf 6 eingeschossen wird. Der Stößel 35 wird durch das Betätigungselement 34 vorzugsweise so gesteuert, dass der Stößel 35 den Kanal 19' normalerweise verschließt und nur zum Einschießen einer neuen Mutter 2 kurz aus dem Kanal 19' herausbewegt und dann zusammen mit der neuen Mutter 2 wieder in den Kanal 19.1 hineinbewegt wird.

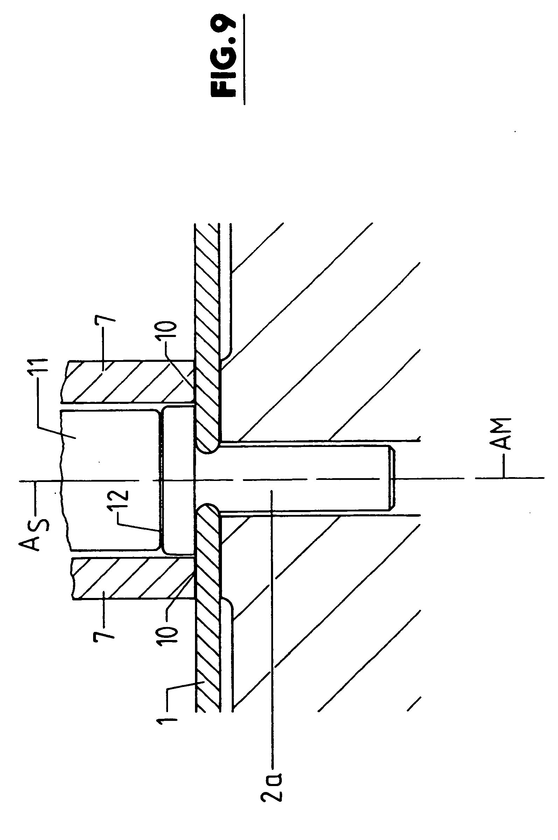

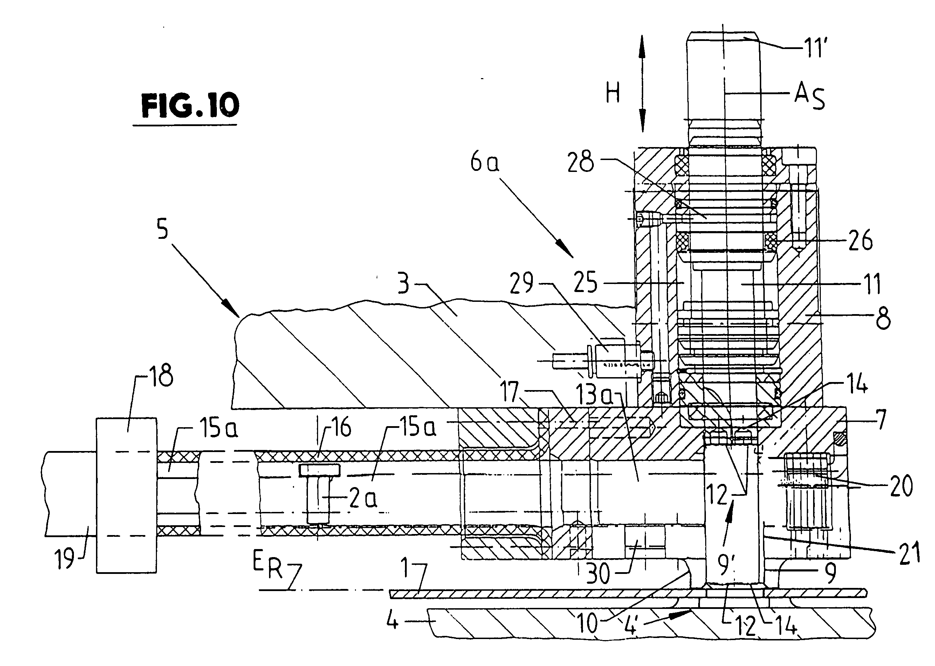

Die Figur 9 zeigt in einer Darstellung ähnlich Figur 1 ein als Bolzen ausgebildetes und in dem Werkstück 1 verankertes Verbindungselement 2a. In der Figur 10 ist nochmals das Werkzeug 5 mit einem Stanzkopf 6a wiedergegeben. Dieser Stanzkopf 6a unterscheidet sich von dem Stanzkopf 6 lediglich dadurch, dass der Stanzkopf 6a zum Verarbeiten der bolzenartigen Verbindungselemente 2a ausgeführt ist. Diese werden dem Stanzkopf 6a über den äußeren Versorgungsschlauch 19a zugeführt und gelangen über eine stanzkopfseitige Zuführung 16a und ein Ladekanal 13a an die Bereitstellungsposition 9', wobei die bolzenförmigen Verbindungselemente mit ihren Bolzenachsen senkrecht zur Förderrichtung orientiert sind. Der Ladekanal 13, der interne Kanal 15 sowie auch der im äußeren Versorgungsschlauch 19a gebildete Führungskanal sind dabei an die Form angepaßt, die die bolzenförmigen Verbindungselemente 2a in Seitenansicht aufweisen, d. h. im Querschnitt in etwa T-förmig ausgebildet.

Vorstehend wurde davon ausgegangen, daß der Kanal 19' durch den Stößel 35 verschlossen wird. Anstelle hiervon oder zusätzlich hierzu können auch andere Mittel vorgesehen sein, beispielsweise eine oder mehrere Klappen, um den Kanal 19' nach dem Einbringen eines Fügeteils 2 oder 2a in Strömungsrichtung der Förderluft vor den Lufteintrittsdüsen 37 zumindes teilweise zu verschließen.

### Bezugszeichenliste

- 1: Werkstück
- 2: Mutter
- 2a: Bolzen
- 3: Niederhalter
- 4: Werkzeugunterteil
- 4': Werkzeugbereich
- 5: Werkzeug
- 6, 6a: Stanzkopf
- 7: Kopfstück des Stanzkopfes
- 7': oberes Kopfstückteil
- 7": unteres Kopfstückteil
- 8: Gehäuse
- 9: Fügekanal
- 9': Bereitstellungsposition
- 10: ringförmige Anlagefläche
- 11: Stempel oder Plunger
- 11': oberes Stempelende
- 12: unteres Stempelende
- 13, 13a: Ladekanal
- 14: Permanentmagnet
- 15, 15a: Kanal
- 16, 16a: Zuführung
- 17: Kupplungsstück
- 17': Druckluftaustrittsdüse
- 18: Kupplungsstück
- 18': Druckluftaustrittsdüse
- 19, 19a: äußerer Versorgungsschlauch
- 19': Kanal des äußeren Versorgungsschlauchs
- 20: Sensor
- 21: Permanentmagnet
- 22: Klinke
- 22', 22": Schenkel
- 23: Gelenk
- 24: Rückstellfeder
- 25: Zylinderraum
- 26: Kolben
- 27: Anschluß
- 28: Zylinderraum
- 29: Anschluß
- 30: Sensor
- 32: Abgabeeinheit
- 33: Führung
- 33': gefederte Klinke
- 34: Betätigungselement
- 35: Stößel
- 36: Anschlußstück
- 37: Druckluftdüse
- a: Abstand
- A: Bewegungsrichtung
- A_{S}: Stempelachse
- A_{M}: Achse der Mutter
- E_{R}: Ebene der ringförmigen Anlagefläche 10

## Patentansprüche

1. Stanzkopf zum Einbringen von Fügeteilen, nämlich von Verbindungselementen (2, 2a), wie Muttern, Bolzen oder von mutter- oder bolzenähnlichen Bauteilen in Werkstücke,
mit einem eine Führung für die Fügeteile (2, 2a) bildenden Fügekanal (13), dem die Fügeteile (2, 2a) von einer äußeren Versorgungseinheit durch einen äußeren Förderluftstrom aus Druckluft über eine äußere Zuführung (16) zugeführt werden und der in einem Fügekanal (19) eine Bereitstellungsposition (9') bildet, wobei der Fügekanal (9) in einem axialen Abstand von der Bereitstellungsposition (9') eine Fügeöffnung bildet,
mit einem Stempel (11) im Fügekanal (9), der zwischen einer Ausgangsstellung, in der eine Stempelfläche (12) des Stempels (11) sich an einem der Fügeöffnung entfernt liegenden Ende des Fügekanals (9) und außerhalb der Bereitstellungsposition (9') an einer der Fügeöffnung abgewandten Seite der Bereitstellungsposition (9') befindet, und einer Fügestellung bewegbar ist, in der der Stempel (11) mit seiner Stempelfläche im Fügekanal (9) angeordnet von der Bereitstellungsposition (9') in Richtung der Fügeöffnung bewegt ist,
**gekennzeichnet durch**
zwei aus einer Ausgangsstellung gegen die Wirkung von Federn schwenkbare Klinken (22) an der Bereitstellungsposition (9'),
wobei die Fügeteile (2, 2a) **durch** einen im Bereich des Stanzkopfes erzeugten Förderluftstrom und/oder **durch** den äußeren Förderluftstrom an die Bereitstellungsposition (9') bewegbar und dort positionierbar sind,
wobei die Klinken (22) in ihrer Ausgangsstellung mit Schenkeln (22") eine Fortsetzung der Führung des Ladekanals (13) bilden und hierfür an der Bereitstellungsposition (9') seitlich in den Fügekanals (9) hineinreichen.

2. Stanzkopf nach Anspruch 1, **gekennzeichnet durch** wenigstens eine Druckluft Austrittsdüse (17') zur Erzeugung des Förderluftstromes.

3. Stanzkopf nach Anspruch 1 oder 2, **gekennzeichnet durch** Mittel zum Sperren der Bereitstellungsposition (9').

4. Stanzkopf nach einem der vorhergehenden Ansprüche, **dadurch gekennzeichnet, dass** die Stanzkopfzuführung (16) oder der Ladekanal (13) zumindest auf einer Teillänge von einem Rohrprofil aus einem biegsamen Material, beispielsweise Kunststoff gebildet sind.

5. Stanzkopf nach einem der vorhergehenden Ansprüche, **dadurch gekennzeichnet, dass** die Stanzkopfführung von dem in einem Gehäuse- oder Kopfteil (7) des Stanzkopfes (6) ausgebildeten Ladekanal (13) sowie von einem einen Kanal (15) für die Fügeteile (2, 2a) bildenden Führungs- oder Rohrstück aus dem biegsamen Material, beispielsweise aus Kunststoff gebildet ist.

6. Stanzkopf nach einem der vorhergehenden Ansprüche, **dadurch gekennzeichnet, dass** die Fügeteile (2, 2a) dem Stanzkopf (6, 6a) jeweils einzeln zugeführt werden.

7. Stanzkopf nach einem der vorhergehenden Ansprüche, **gekennzeichnet durch** Steuermittel (20) zum Abschalten der Förderluft dann, wenn ein Fügeteil (2, 2a) an der Bereitstellungsposition (9') positioniert ist.

8. Stanzkopf nach einem der vorhergehenden Ansprüche, **gekennzeichnet durch** Mittel zum lagegenauen Positionieren des jeweiligen Fügeteils (2, 2a) an der Bereitstellungsposition (9').

9. Stanzkopf nach Anspruch 8, **dadurch gekennzeichnet, dass** die Mittel zum lagegenauen Positionieren von wenigstens einem Permanentmagneten (21) und/oder wenigstens einer Vakuumöffnung gebildet sind.

10. Stanzkopf nach einem der vorhergehenden Ansprüche, **dadurch gekennzeichnet, dass** die Stempelfläche (12) in der Ausgangsstellung des Stempels (11) von der Bereitstellungsposition (9') oder von einem an der Bereitstellungsposition bereitstehenden Fügeteil (2, 2a) beabstandet ist.

11. Stanzkopf nach einem der vorhergehenden Ansprüche, **dadurch gekennzeichnet, dass** an der Stempelfläche (12) Mittel zum Halten des Fügeteils (2, 2a), beispielsweise in Form wenigstens eines Permanentmagneten (14) und/oder einer Vakuumöffnung vorgesehen sind.

12. Stanzkopf nach einem der vorhergehenden Ansprüche, **gekennzeichnet durch** Mittel zum Rückstellen des Stempels (11) in seiner Ausgangsstellung, wobei diese Mittel von einem Druckmedium, beispielsweise von Druckluft in einem ersten Zylinderraum (25) gebildet sind, in welchem ein mit dem Stempel (11) verbundener Kolben (26) axial verschiebbar vorgesehen ist.

13. Stanzkopf nach einem der vorhergehenden Ansprüche, **gekennzeichnet durch** Mittel zum Bewegen des Stempels (11) aus seiner Ausgangsstellung in eine Fügestellung oder zum Halten des Stempels (11) in dieser Fügestellung, wobei diese Mittel von einem mit dem Stempel (11) verbundenen Kolben (26) gebildet sind, der in einem zweiten, mit einem Druckmedium, beispielsweise mit Druckluft beaufschlagbaren Zylinderraum (28) verschiebbar vorgesehen ist.

14. Stanzkopf nach einem der vorhergehenden Ansprüche, **dadurch gekennzeichnet, dass** das Einschießen der Fügeteile (2, 2a) an dem wenigstens einen Stanzkopf (6, 6a) unabhängig von der Position des Stempels (11) oder der Presse frühestens dann erfolgt, wenn sich der Stempel mit seiner Stempelfläche (12) in den Fügekanal (9) hineinbewegt hat.

15. Stanzkopf nach einem der Ansprüche 3 bis 13, **dadurch gekennzeichnet, dass** die Mittel zum Sperren der Bereitstellungsposition (9') von dem Stempel des Stanzkopfes (16) und/oder von einem anderen mechanischen Element gebildet sind, welches zum Sperren in die Bereitsstellungsposition (9') oder in den Ladekanal (13) hineinbewegbar ist.

16. Stanzkopf nach einem der vorhergehenden Ansprüche, **gekennzeichnet durch** eine Aufgabe- oder Einschußeinrichtung (32), mit einem Betätigungselement (35), mit dem die Fügeteile (2, 2a) jeweils in einen Kanal (19') der äußeren Zuführung (19, 19a) einführbar sind, und zwar in einer Position, die in Strömungsrichtung der Förderluft nach Lufteintrittsdüsen (37) vorgesehen ist.

17. Stanzkopf nach Anspruch 16, **dadurch gekennzeichnet, dass** Mittel vorgesehen sind, um den Kanal (19') nach dem Einbringen eines oder mehrerer Fügeteile (2, 2a) in Strömungsrichtung der Förderluft vor den Lufteintrittsdüsen (37) zu verschließen.

18. Bearbeitungswerkzeug, insbesondere Tiefzieh- und/oder Stanz- und/oder Umformwerkzeug zur Verwendung in einer Presse, mit wenigstens zwei gegenläufig zueinander bewegbaren Werkzeugteilen (3, 4) und mit wenigstens einem an einem Werkzeugteil (3) vorgesehenen Stanzkopf (6, 6a) nach einem der vorhergehenden Ansprüche.

19. Bearbeitungsvorrichtung, beispielsweise Presse, mit einem Stanzkopf (6, 6a) oder einem Bearbeitungswerkzeug nach einem der vorhergehenden Ansprüche.

## Claims

1. Punch head for placing joining parts, namely connecting elements (2, 2a), such as nuts, bolts or nut- or bolt-like components, into workpieces, with a joining channel (13) which forms a guide for the joining parts (2, 2a) and to which the joining parts (2, 2a) are fed by an external supply unit by means of an external conveying-air stream 245 of compressed air via an external feeding means (16) and which forms a ready position (9') in a joining channel (19), the joining channel (9) forming a joining opening at an axial distance from the ready position (9'), with a ram (11) in the joining channel (9), which ram can be moved between a starting position, in which a ram surface (12) of the ram (11) is situated at an end of the joining channel (9) situated away from the joining opening and, outside the ready position (9'), is situated on a side of the ready position (9') which faces away from the joining opening, and a joining position, in which the ram (11) is moved, with its ram surface arranged in the joining channel (9), from the ready position (9') in the direction of the joining opening, **characterized by** two latches (22) which can be pivoted from a starting position counter to the action of springs to the ready position (9'), the joining parts (2, 2a) being movable by a conveying air stream produced in the region of the punch head and/or by the external conveying air stream to the ready position (9') and being positionable there,
the latches (22), in their starting position, forming, by means of limbs (22"), a continuation of the guide of the loading channel (13) and, in this regard, reaching laterally into the joining channel (9) at the ready position (9').

2. Punch head according to Claim 1, **characterized by** at least one compressed-air outlet nozzle (17') for generating the conveying-air stream.

3. Punch head according to Claim 1 or 2, **characterized by** means for blocking the ready position (9').

4. Punch head according to one of the preceding claims, **characterized in that** the punch-head feeding means (16) or the loading channel (13) is formed at least over a partial length by a tubular profile of a flexible material, for example plastic.

5. Punch head according to one of the preceding claims, **characterized in that** the punch-head guide is formed by the loading channel (13) formed in a housing part or head part (7) of the punch head (6) and by a guide piece or tubular piece which is made from the flexible material, for example from plastic, and forms a channel (15) for the joining parts (2, 2a).

6. Punch head according to one of the preceding claims, **characterized in that** the joining parts (2, 2a) are in each case fed individually to the punch head (6, 6a).

7. Punch head according to one of the preceding claims, **characterized by** control means (20) for switching off the conveying air when a joining part (2, 2a) is positioned at the ready position (9').

8. Punch head according to one of the preceding claims, **characterized by** means for the positionally precise positioning of the respective joining part (2, 2a) at the ready position (9').

9. Punch head according to Claim 8, **characterized in that** the means for the positionally precise positioning are formed by at least one permanent magnet (21) and/or at least one vacuum opening.

10. Punch head according to one of the preceding claims, **characterized in that**, in the starting position of the punch (11), the punch surface (12) is spaced apart from the ready position (9') or from a joining part (2, 2a) provided at the ready position.

11. Punch head according to one of the preceding claims, **characterized in that** means for holding the joining part (2, 2a), for example in the form of at least one permanent magnet (14) and/or a vacuum opening, are provided on the ram surface (12).

12. Punch head according to one of the preceding claims, **characterized by** means for resetting the ram (11) in its starting position, these means being formed by a pressure medium, for example by compressed air, in a first cylinder space (25) in which a piston (26) connected to the ram (11) is provided in an axially displaceable manner.

13. Punch head according to one of the preceding claims, **characterized by** means for moving the ram (11) from its starting position into a joining position or for holding the ram (11) in this joining position, these means being formed by a piston (26) which is connected to the ram (11) and is provided displaceably in a second cylinder space (28) which can be charged with a pressure medium, for example with compressed air.

14. Punch head according to one of the preceding claims, **characterized in that** the joining parts (2, 2a) are shot into place by way of the at least one punch head (6, 6a) irrespective of the position of the ram (11) or of the press at the earliest when the ram has moved with its ram surface (12) into the joining channel (9).

15. Punch head according to one of Claims 3 to 13, **characterized in that** the means for blocking the ready position (9') are formed by the ram of the punch head (16) and/or by another mechanical element which can be moved for blocking purposes into the ready position (9') or into the loading channel (13).

16. Punch head according to one of the preceding claims, **characterized by** a delivery or shooting-in device (32), with an actuating element (35) with which the joining parts (2, 2a) can be guided in each case into a channel (19') of the outer feeding means (19, 19a), to be precise in a position which is provided downstream of air inlet nozzles (37) in the flow direction of the conveying air.

17. Punch head according to Claim 16, **characterized in that** means are provided in order to close the channel (19') upstream of the air inlet nozzles (37), in the direction of flow of the conveying air, after one or more joining parts (2, 2a) have been placed in it.

18. Machining tool, in particular deep-drawing and/or punching and/or forming tool, for use in a press, with at least two tool parts (3, 4) which can be moved in an opposed manner with respect to each other, and with at least one punch head (6, 6a), which is provided on a tool part (3), according to one of the preceding claims.

19. Machining tool, for example press, with a punch head (6, 6a) or a machining tool according to one of the preceding claims.

## Revendications

1. Tête de poinçonnage pour insérer des pièces de jonction, notamment des éléments de connexion (2, 2a) comme des écrous, des boulons ou des composants semblables à des écrous ou des boulons,dans des pièces d'oeuvre,
avec un canal de jonction (13) formant un guidage pour les pièces de jonction (2, 2a) dans lequel sont amenées les pièces de jonction (2, 2a) à partir d'une unité d'approvisionnement extérieure par un courant d'air de transport consistant en air comprimé en passant par une alimentation extérieure (16) et qui forme une position de mise à disposition (9') dans un canal de jonction (19), le canal de jonction (9) formant une ouverture de jonction à une distance axiale de la position de mise à disposition (9'), avec un plongeur (11) dans le canal de jonction (9) qui peut être mu entre une position de départ dans laquelle une surface (12) du plongeur (11) se trouve à une extrémité du canal de jonction (9) éloignée de l'ouverture de jonction et en dehors de la position de mise à disposition (9') sur un côté de la position de mise à disposition (9') opposé à l'ouverture de jonction et une position de jonction dans laquelle le plongeur (11) avec sa surface de plongeur disposée dans le canal de jonction (9) est mu de la position de mise à disposition (9') en direction de l'ouverture de jonction,
**caractérisé par** deux cliquets (22) proches de la position de mise à disposition (9') peuvant pivoter à partir d'une position de départ contre l'action de ressorts,
les pièces de jonction (2, 2a) pouvant être mues par un cours d'air de transport produit dans la région de la tête de poinçonnage et / ou par le cours d'air de transport extérieur jusqu'à la position de mise à disposition (9') et y être positionnés,
les cliquets (22) dans leur position de départ formant avec les branches (22") un prolongement du guidage du canal de chargement (13) et s'avançant à cet effet latéralement dans le canal de jonction (9) jusqu'à la position de mise à disposition (9').

2. Tête de poinçonnage selon la revendication 1, **caractérisée par** au moins une buse de sortie (17') d'air comprimé pour la production du courant d'air de transport.

3. Tête de poinçonnage selon la revendication 1 ou 2, **caractérisée par** des moyens pour bloquer la position de mise à disposition (9').

4. Tête de poinçonnage selon une des revendications précédentes, **caractérisée en ce que** l'alimentation (16) de la tête de poinçonnage ou le canal de chargement (13) sont formés au moins sur une longueur partielle par un profil tubulaire en matériau flexible, par exemple en plastique.

5. Tête de poinçonnage selon une des revendications précédentes, **caractérisée en ce que** le guidage de la tête de poinçonnage est formé par un canal de chargement (13) formé dans une partie logement ou partie tête (7) de la tête de poinçonnage (6) ainsi que par un morceau de guidage ou morceau de tube qui forme un canal (15) pour les pièces de jonction (2, 2a) et qui est en matériau flexible, par exemple en plastique.

6. Tête de poinçonnage selon une des revendications précédentes, **caractérisée en ce que** les pièces de jonction (2, 2a) sont chaque fois amenées séparément jusqu'à la tête de poinçonnage (6, 6a).

7. Tête de poinçonnage selon une des revendications précédentes, **caractérisée par** des moyens de commande (20) pour arrêter l'air de transport, quand une pièce de jonction (2, 2a) est positionnée dans la position de mise à disposition (9').

8. Tête de poinçonnage selon une des revendications précédentes, **caractérisée par** des moyens pour positionner avec précision la pièce de jonction (2, 2a) concernée dans la position de mise à disposition (9').

9. Tête de poinçonnage selon la revendication 8, **caractérisée en ce que** les moyens pour positionner avec précision sont formés par au moins un aimant permanent (21) et / ou au moins une ouverture à vide.

10. Tête de poinçonnage selon une des revendications précédentes, **caractérisée en ce que** la surface (12) de plongeur dans la position de départ du plongeur (11) est espacée de la position de mise à disposition (9') ou d'une pièce de jonction (2, 2a) se trouvant dans la position de mise à disposition.

11. Tête de poinçonnage selon une des revendications précédentes, **caractérisée en ce qu'**il est prévu, sur la surface (12) de plongeur, des moyens pour tenir la pièce de jonction (2, 2a), par exemple sous la forme au moins d'un aimant permanent (14) et / ou d'une ouverture à vide.

12. Tête de poinçonnage selon une des revendications précédentes, **caractérisée par** des moyens pour ramener le plongeur (11) dans sa position de départ, ces moyens étant formés par un moyen de pression, par exemple par de l'air comprimé dans une première chambre de cylindre (25) dans laquelle un piston (26) relié au plongeur (11) est prévu de manière axialement déplaçable.

13. Tête de poinçonnage selon une des revendications précédentes, **caractérisée par** des moyens pour mouvoir le plongeur (11) de sa position de départ dans une position de jonction ou pour maintenir le plongeur (11) dans cette position de jonction, ces moyens étant formés par un piston (26) relié au plongeur (11), lequel piston est prévu de manière axialement déplaçable dans une deuxième chambre (28) de cylindre qui peut être exposée à un moyen sous pression, par exemple à de l'air comprimé:

14. Tête de poinçonnage selon une des revendications précédentes, **caractérisée en ce que** l'injection des pièces de jonction (2, 2a) sur ladite au moins une tête de poinçonnage (6, 6a), indépendamment de la position du plongeur (11) ou de la presse, a lieu au plus tôt quand le plongeur est entré avec sa surface (12) de plongeur dans le canal de jonction (9).

15. Tête de poinçonnage selon une des revendications 3 à 13, **caractérisée en ce que** les moyens pour bloquer la position de mise à disposition (9') sont formés par le plongeur de la tête de poinçonnage (16) et/ou par un autre élément mécanique qui, pour le blocage, peut être amené dans la position de mise à disposition (9') ou dans le canal de chargement (13).

16. Tête de poinçonnage selon une des revendications précédentes, **caractérisée par** un dispositif de livraison ou d'injection (32), avec un élément d'actionnement (35), avec lequel les pièces de jonction (2, 2a) peuvent être respectivement introduites dans un canal (19') de l'alimentation extérieure (19, 19a) et, en fait, dans une position qui est prévue dans le sens d'écoulement de l'air de transport après des buses d'entrée d'air (37).

17. Tête de poinçonnage selon la revendication 16, **caractérisée en ce que** des moyens sont prévus pour fermer le canal (19') après l'insertion d'une ou plusieurs pièces de jonction (2, 2a) dans le sens d'écoulement de l'air de transport avant les buses d'entrée d'air (37).

18. Outil d'usinage, en particulier outil d'estampage profond et / ou de poinçonnage et / ou de façonnage à utiliser dans une presse, avec au moins deux pièces d'outil (3, 4) pouvant être mues en sens inverse l'une vers l'autre et avec au moins une tête de poinçonnage (6, 6a) prévue sur une pièce d'outil (3) selon une des revendications précédentes.

19. Dispositif d'usinage, par exemple une presse, avec une tête de poinçonnage (6, 6a) ou un outil d'usinage selon une des revendications précédentes.
